# EUROPEAN PATENT APPLICATION

(11) **EP 4 556 092 A1**
(43) Date of publication of application: **21.05.2025**
(21) Application number: 23383164.3
(22) Date of filing: 15.11.2023
(51) Int. Cl.: B01D 35/10, A47L 15/42, D06F 39/10

(54) **EFFLUENT FILTRATION OF A WASHING MACHINE THROUGH A HELICAL BRUSH**

(71) Applicant: MANN+HUMMEL LIFE SCIENCES & ENVIRONMENT HOLDING SINGAPORE PTE. LTD., Singapore 139234 (SG)
(72) Inventor: LORENTE, Sonia, 50006 Zaragoza (ES); DEL RIO, Laura, 50460 Longares (ES); ESTEBAN, Ignacio, 50018 ZARAGOZA (ES); GRACIA, Jaime, 50018 Zaragoza (ES); BIELSA, Raúl, 50190 Zaragoza (ES); MARZAL, Leopoldo, 50019 Zaragoza (ES)
(74) Representative: Mann + Hummel Intellectual Property

(57) **Abstract**

The invention refers to a filter for effluent of washing machines comprises a helical flow channel. An elongate brush extends along the flow channel. Preferably, the brush is contained within a filter tube. The brush can be replaced, while the filter tube is generally reused with a new brush. The brush and the filter tube capture fibres and particles such as microplasics, when effluent is fed through the flow channel. A support unit may at least partially define the cross section of the flow channel. Preferably, the support unit is detachably arranged in a housing.

## Description

### Technical field

The present invention refers to a filter assembly for filtering effluent of a washing machine.

### Background

When clothing is being washed, fibers and debris are released. Since clothing is often made with synthetic fibers, a certain amount of microplastics is generated during each washing cycle. Nowadays, microplastics emission is frequently considered as a severe ecological problem.

If the fibres and microplastics shall not be released into the environment, they need to be held back in order to be suitably disposed of. To this end, the use of filters is generally known, for instance from WO 2021/070102 A1.

US 2019/0126326 A1 discloses a fiber catcher for removing fibers, microfibers, hair and similar items from fluids, such as may be found in effluent pipes, streams, washing machines and clothes dryers. The fiber catcher includes a plurality of arms with a plurality of teeth for collecting fibers that are suspended in fluids. The fiber catcher is generally spherical. For use, the fiber catcher is placed in a drum of the washing machine together with clothing being washed.

CN 110685127 A describes a filtering device for use in a washing machine. The filtering device includes a first base body and a tentacle unit movably disposed on the first base body. The tentacle unit includes a plurality of tentacles configured to adsorb particles in the medium to be filtered. The filter device is generally spherical, elliptical or disk-shaped. The washing machine includes an inner cylinder and a circulation filtration system. The circulation filtration system includes a circulation pipeline, a circulation pump and a filter box. Both ends of the circulation pipeline are connected to the inner cylinder. The circulation pump and the filter box are arranged on the circulation pipeline. The filter device is placed in the filter box. The circulation pump pumps the wash water in the inner barrel to the filter box. After the filter device in the filter box has filtered the wash water, it returns to the inner barrel. This reciprocating cycle circulates the wash water in the inner barrel. The filter device can be removed from the filter box through a door cover and can be manually cleaned.

It is an object of the invention to provide efficient filtration of effluent of washing machines requiring little maintenance effort.

This is achieved by a filter assembly according to claim 1, a filter module according to claim 9, the use of a filter module according to claim 14 and a washing machine according to claim 15. Advantageous embodiments are given in the subclaims and the description.

### Disclosure of the invention

In accordance with the invention, a filter assembly for filtering effluent of a washing machine is provided. The effluent may also be referred to as wastewater. The effluent generally comprises dirt, having been washed out from clothing and the like, and material of the clothing, in particular fibres and debris, which may contain microplastics.

The filter assembly comprises a support unit, which provides a helical flow channel. Typically, the support tube delimits the flow channel over at least part of its longitudinal and/or circumferential extension. The flow channel has a first end and a second end. The first end of the flow channel constitutes an inlet for effluent to be filtered while passing through the flow channel. The second end of the flow channel constitutes an outlet for at least part of the effluent having been filtered while passing through the flow channel. The flow channel generally forms at least 2, preferably at least 3 convolutions.

The filter assembly further comprises a brush, which is detachably arranged in the helical flow channel. The brush extends along the flow channel over at least part of the longitudinal extension of the flow channel from the first end towards the second end. The elongated brush generally comprises a multitude of bristles. The brush may span over part of the cross section of the flow channel or the entire cross section of the flow channel. A circumferential border, such as a tube, against which at least some of the bristles abut, may be provided within the flow channel. The circumferential border may span the cross-section of the flow channel. In other words, the circumferential border covers a cross section of the flow channel. Effluent entering the first end of the flow channel is forced to enter a first end of the circumferential border. Water containing debris is therefore prevented from bypassing the circumferential border containing the brush.

When effluent containing fibres and debris is fed through the flow channel, in particular the circumferential border, the brush, in particular its bristles, catch these particles and prevent them from travelling to the second end of the flow channel. Centrifugal forces due to the helical shape of the flow channel may assist in moving the particles towards a circumferential border of or within the flow channel. This motion contributes to keep a radially inner part of the flow channel's cross section or the brush clean. This contributes to extend service life of the filter assembly.

After a certain time of operation, the brush or the flow channel may become clogged. For maintenance of the filter assembly, the brush and the border, if present, is pulled out of the flow channel and replaced with a new brush and border, if applicable. Alternatively, the present brush and border may be cleaned, while assuring that no microplastics are released into a sewage system, and rearranged inside the flow channel. Since prevention of release of microplastics during cleaning may be difficult, it is preferred to dispose or recycle the old brush and border with the accumulated debris and to insert a new brush and border into the flow channel. The flow channel of the support unit may similarly be cleaned during maintenance of the filter assembly.

Replacement of the brush is easy to perform and requires little time and preferably no tools. Suitable brushes are available at low cost.

A length of the brush may be at least 20 times, preferably, at least 40 times, a cross-sectional width of the flow channel.

A longitudinal extension of the flow channel from the first end to the second end may be at most 1,4 times, preferably at most 1,2 times, a length of the brush. Preferably, the brush extends all the way from the first end to the second end of the flow channel.

The brush may comprise a central cord and bristles protruding from the central cord. The central cords facilitates insertion of the brush into the flow channel. Bristles protruding radially from the cord assist in guiding particles towards a circumferential delimitation of the flow channel or a border within the flow channel.

The brush may be contained within a tube made from filter material, preferably nonwoven filter material. Preferably, the brush spans across a diameter of the tube. In other words, the brush covers a cross section of the tube. The filter tube forms a border within the flow channel. Dirt in the effluent flowing into the first end of the filter tube is prevented from entering the flow channel due to the filter material. Effluent is filtered throughout the length of the filter tube. Filtered effluent may pass through the filter tube towards a circumferential delimitation of the flow channel and into an inner space of a support tube. This contributes to keep the pressure loss low. Energy consumption for filtering the effluent may be reduced. Further, the reduced pressure loss may avoid particles from being detached from the bristles of the brush. Consequently, filtration efficiency is enhanced. A maximum pore size of the filter tube may be 200 µm, preferably 100, particularly preferably 50 µm. The tube is preferably circumferentially sealed against a delimitation of the flow channel at the first end.

Preferably, the tube is detachable from the support unit. This may facilitate maintenance. During maintenance, the tube and brush are removed from the support unit. Then, a new tube with a pre-inserted brush is arranged in the flow channel, e.g. by winding the tube and brush assembly around a support tube of the support unit.

The support unit may comprise a cylindrical support tube. The flow channel may be wound around the support tube. The support tube provides stability to the flow channel and the brush and tube, if present. The support tube may delimit the flow channel from an inner space of the support tube over at least part of its longitudinal extension.

Preferably, the support unit comprises a cover, which seals the support tube at a first face associated with the first end of the flow channel. This prevents unfiltered effluent to enter the inner space of the support tube. Rather, the unfiltered effluent is forced to enter the flow channel at its first end on the outside of the support tube.

The support tube may have at least one flow opening (flow window), which fluidically connects an inner space of the support tube. The support tube may comprise longitudinal and circumferential ribs. The flow openings are formed between adjacent ribs. In other words, the open space between neighboring ribs presents the flow openings. This design keeps a large area of the support tube that is in contact with the flow channel open for filtered effluent to flow into the inner space of the support tube. Filtered effluent may pass into the inner space of the support tube through the openings between the longitudinal and circumferential ribs. Clean water may easily be drained from the inner space. At least one flow opening is provided in an end section of the flow channel associated with its second end. Preferably, a multitude of flow openings is provided along the length of the support tube, in particular along the entire longitudinal extension of the flow channel.

The support unit may comprise a helical guiding element, which separates adjacent convolutions of the flow channel. The helical guiding element may radially protrude from a cylindrical support tube, with respect to an axis of the support tube. In other words, the helical guiding element may form a ramp, which descends along the support tube. Besides delimiting adjacent convolutions of the flow channel from one another, the helical guiding element provides stability to the brush and, if present, a filter tube within the flow channel.

The support unit may be a monolithic part, preferably an injection molded plastic part. This allows for cost efficient manufacturing of the support unit. Further, assembly and maintenance of the filter assembly may be facilitated, since less separate parts need be manipulated.

The invention further relates to a filter module comprising a housing and a filter assembly according to the invention, as described above. Preferably, the filter assembly is removably arranged inside the housing. For filtration operation, the filter assembly is arranged inside the housing. For ease of maintenance, i.e. replacement of the brush, the filter assembly is removed from the housing.

The housing may have a cylindrical wall, which delimits the flow channel. In particular, with respect to a common axis of the cylindrical wall and a support tube, the flow channel may be delimited towards the outside by the cylindrical wall of the housing and towards the inside at least partially be delimited by the cylindrical support tube. Adjacent convolutions of the flow channel may be delimited from one another by a helical guiding element. In other words, the housing may delimit part of a cross section of the flow channel, while the remainder of the flow channel's cross section may be defined by the support unit.

The first end of the flow channel may be fluidically connected with an inlet port through an inlet opening in the cylindrical wall. This design may provide tangential infeeding of raw effluent. This contributes to keep pressure loss low, when guiding the effluent into the flow channel at its first end.

The flow channel may surround an inner space, in particular the inner space of a support tube. The flow channel is generally fluidically connected with the inner space. After filtration through the brush and the tube, if present, in the flow channel, filtered effluent enters the inner space. Preferably, the inner space is fluidically connected with an outlet port through an outlet opening arranged in a central portion of an end wall of the housing. This design allows in particular for draining of clean water from an inner space of a cylindrical support tube.

The housing may have a removable closure. Removing the closure facilitates replacement of the brush and tube, if present. In particular, the filter assembly may be removed from the housing when the closure is detached. Preferably, the closure may be removed and installed without tools. A handle may be provided to this end. Additionally or alternatively, a tool interface may be provided at the closure. Mating threads may be provided on the closure and housing.

The invention also relates to the use of a filter module according to the invention, as described above, for filtering effluent of a washing machine. Thereby, the ecological impact of operating the washing machine may be reduced.

The invention further relates to a washing machine comprising a filter module according to the invention, as described above. During operation of the washing machine, less particles, such as microplastics, are fed into a sewage system. The washing machine typically comprises a water inlet for receiving clean water, a washing drum, and a water outlet for discharging wastewater. Preferably, the filter module is fluidically arranged between the washing drum and the water outlet. In other words, effluent of the washing drum is directed through the filter assembly prior to being discharged via the water outlet. An inlet port of the filter module may receive effluent from the drum. An outlet port of the filter module may be connected to the water outlet of the washing machine. Alternatively, the outlet port of the filter module may present the water outlet of the washing machine.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a washing machine according to the invention comprising a filter module according to the invention, in a schematic sketch;
- Fig. 2: shows a filter module according to the invention, in a schematic perspective view;
- Fig. 3: shows the filter module form Figure 2 in a schematic longitudinal section, wherein a brush is arranged within a filter tube, the brush and the filter tube being received within a helical flow channel;
- Fig. 4: shows the helical filter tube and brush of the filter module from Figure 3, in a schematic perspective view;
- Fig. 5: shows a schematic cross section through the brush and filter tube from Figure 4, with particles being located near a central cord of the brush;
- Fig. 6: shows a schematic cross section as in Figure 5, with particles having travelled radially outwardly to the filter tube during use of the filter module.

### Detailed description

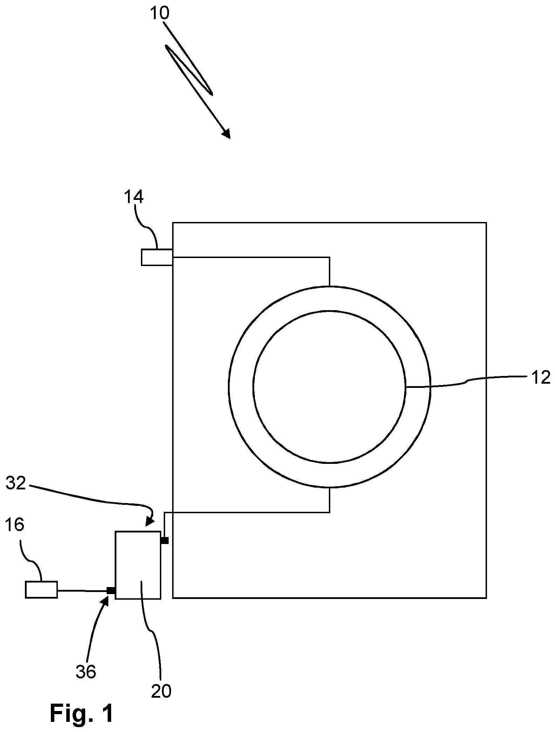

**Figure 1** shows a washing machine **10.** The washing machine 10 comprises a rotatable drum **12** for receiving clothing or the like to be washed. Fresh water is fed into the drum 12 via a water inlet **14** of the washing machine 10. Wastewater (effluent) from the drum 12 is discharged into a sewage system (not depicted) via a water outlet **16** of the washing machine 10. Fluidically between the drum 12 and the water outlet 16 a filter module **20** is arranged. The filter module 20 may be arranged outside of the washing machine 10, as depicted in Figure 1, or may be arranged within a housing of the washing machine 10 (not depicted). The filter module 20 prevents debris, which may contain microplastics, from being fed into the sewage system.

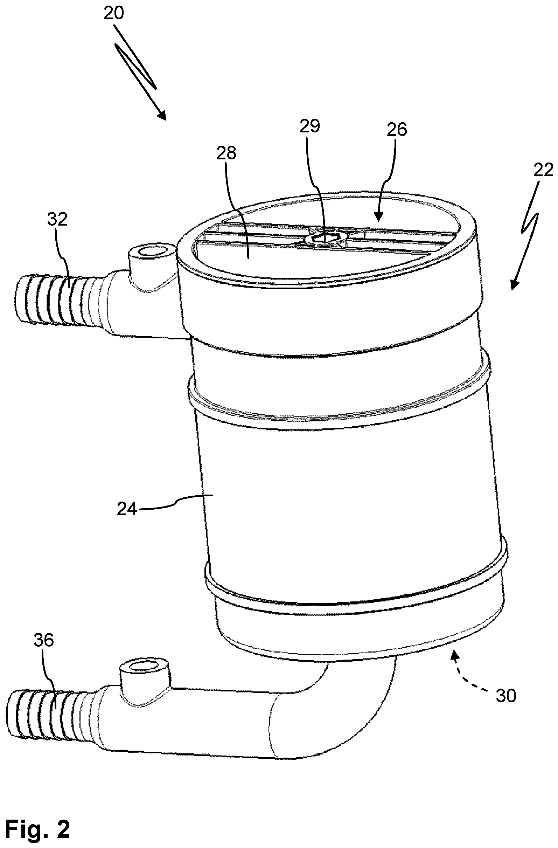

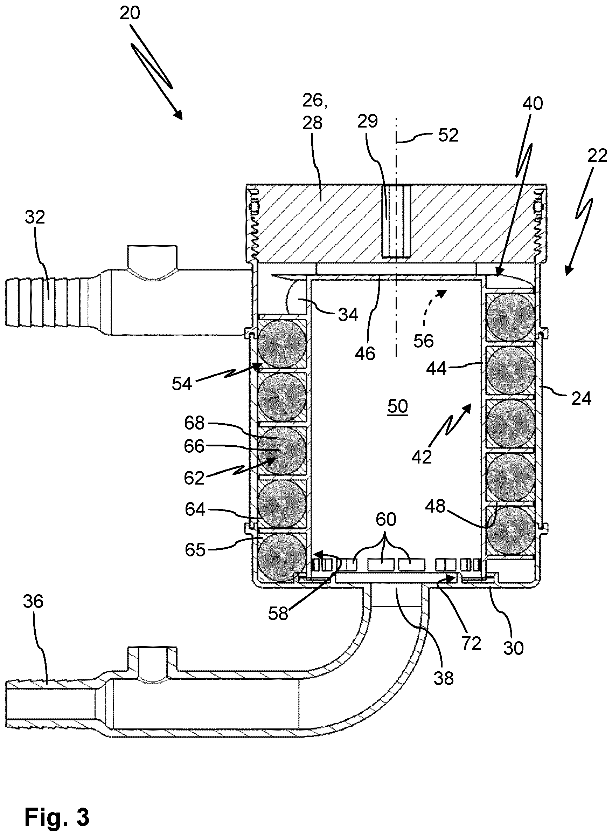

**Figures 2** and **3** show the filter module 20 of the washing machine 10. The filter module 20 comprises a housing **22,** which has a cylindrical wall **24.** A removable closure **26** is attached to the cylindrical wall 24 at a top face via a threaded connection. The closure 26 is provided with a handle **28** and a tool interface **29,** for removing and fastening it from or to the cylindrical wall 24. A bottom wall or end wall **30** is provided at a bottom face of the housing 22.

An inlet port **32** allows raw effluent from the drum 12 to be fed into the housing 22 through an inlet opening **34** in the cylindrical wall 24. An outlet port **36** allows filtered effluent to be fed to the water outlet 16 through an outlet opening **38** in the center of end wall 30.

For removing fibres, dirt particles and debris, in particular microplastics from the effluent (wastewater), a filter assembly **40** is removably arranged within the housing 22. For removing and inserting the filter assembly 40, the housing 22 is opened by detaching the closure 26.

A support unit **42** of the filter assembly 40 comprises a cylindrical support tube **44,** a cover **46** and a helical guiding element **48.** The support tube 44 circumferentially surrounds an inner space **50.** At a first face, the cover 46 spans across the support tube 44 in order to separate the inner space 50 from an environment. The support tube 44 and the cylindrical wall 24 of the housing are arranged coaxial to one another around a common axis **52.** The helical guiding element 48 radially protrudes from the support tube 44 and abuts the cylindrical wall 24. The guiding element 48 is wound around the support tube 44. The guiding element 48 is inclined against axis 52, such that it descends or ascends along the axis 52. A second face of the support tube 44 may be open; at the second face, the support tube 44 may sealingly rest on the end wall 30 of the housing 24. For example, the support tube 44 may have a catch or sealing lip (not shown) that cooperates with a corresponding groove (not shown) at the end wall 30 of the housing 24 to seal the support tube 44 against the housing 24.

Between the support tube 44 and the cylindrical wall 24, the helical guiding element 48 separates adjacent convolutions (or revolutions) of a helical flow channel **54.** With respect to a cross section of the flow channel 54, the flow channel 54 is circumferentially bounded by the support tube 44 (towards the inside with respect to axis 52), by the cylindrical wall 24 (towards the outside with respect to axis 52), and by the helical guiding element 48 (in both directions along axis 52). In the depicted embodiment, the flow channel 54 comprises approiximately four and a half convolutions. The last convolution of the flow channel 54 may partially be delimited by the end wall 30 in downward direction of axis 52.

Note that the cylindrical wall 24 of housing 22 is impermeable for effluent. The guiding element 48 may be permeable or preferably impermeable. An impermeable guiding element 48 may sealingly abut the cylindrical wall 24. The support tube 44 is generally permeable for effluent at least in sections. In other words, the flow channel 54 may be open towards the inner space 50 of the support tube 44.

A first end **56** of the flow channel 54 is associated with the inlet port 32 (note that the first end 56 is located behind the drawing plane of Figure 3). The first end 56 may be arranged just below the cover 46. The inlet opening 34 provides fluid communication between the inlet port 32 and the first end 56 of the flow channel 54. The cover 46 separates the inner space 50 from the inlet opening 34 and the inlet port 32. Thus, raw effluent is introduced into the flow channel 54 at its first end 56.

A second end **58** of the flow channel 54 is associated with the outlet port 36.

At least in an end section of the flow channel, i.e. near the second face of the support tube 44, the support tube 44 is provided with flow openings **60.** Preferably, further flow openings are provided along the support tube 44 or flow channel 54, respectively (not depicted). The support tube 44 may comprise longitudinal and circumferential ribs along the radial body of the support tube 44, wherein the flow openings 60 are each provided between a pair of longitudinal ribs and a pair of circumferential ribs. The support tube 44 and the flow openings 60 provide fluid communication between the flow channel 54 and the inner space 50 of the support tube 44. Thus, the flow channel 54 is fluidically connected to the outlet port 36 via the flow openings 60, the inner space 50 and the outlet opening 38.

For filtering the effluent, a brush **62** is provided within the flow channel 54. The brush 62 extends from the first end 56 towards the second end 58, preferably all the way to the second end 58.

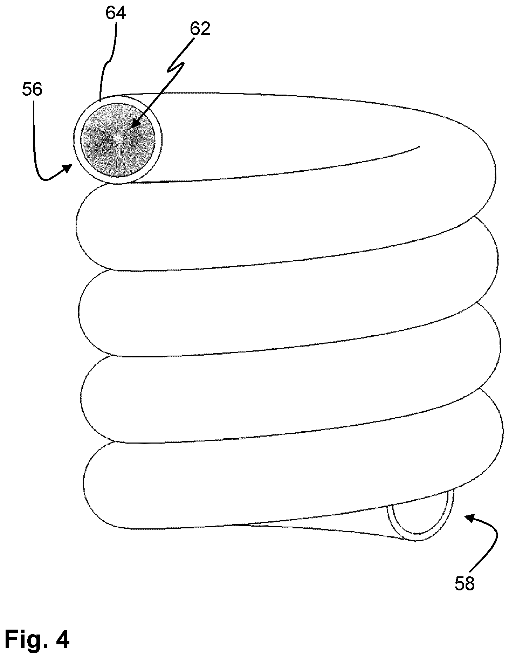

The brush 62 to is arranged inside a tube **64,** see also **Figure 4****.** The tube 64 is made from filter material, preferably nonwoven filter material. The tube 64 is contained within the flow channel 54 and extends from the first end 56 to the second end 58. Preferably, the filter tube 68 is detachable from the support unit 42. At the first end 56, the tube 64 is circumferentially (with respect to the cross section of the flow channel 54) sealed against the delimitation of the flow channel 54. Along its extension, the tube 64 may fill the flow channel 54 across its cross section; in other a free space **65** between the tube 64 and the delimitation of the flow channel 54, i.e. the support tube 44, the guiding element 48 and the cylindrical wall 24, may be filled with material of the tube 64, such as the nonwoven filter material remain.

The brush 62 comprises a central cord **66** and bristles **68,** which are fixed to the central cord 66 and protrude from the central cord 66. Free ends of (at least most of) the bristles 68 abut the filter tube 64. In other words, the brush 62 covers the cross section of the tube 64.

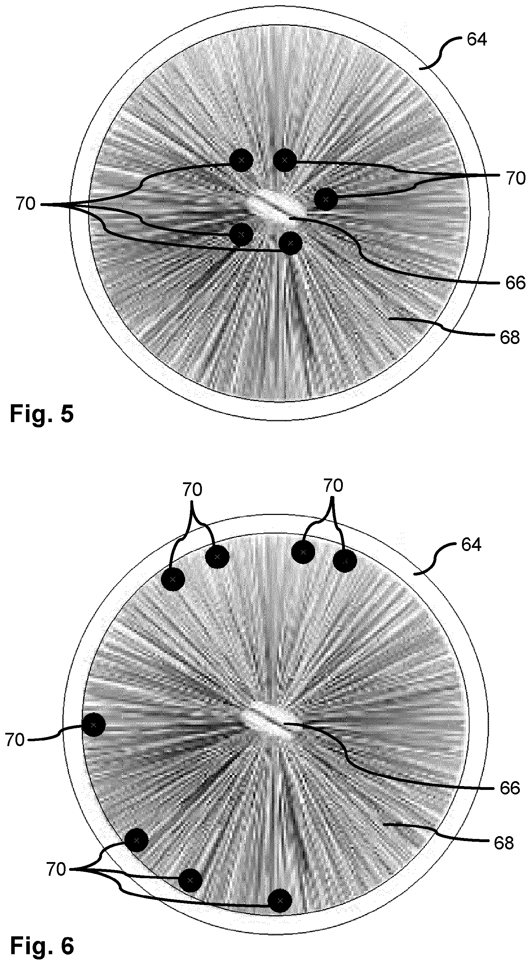

When effluent containing particles **70** such as microplastics or fibres is fed through the tube 64, the bristles 68 of the brush 62 capture these particles 70, see **Figure 5****.** While more effluent passes through the tube 64, the particles eventually travel along the bristles 68 towards the inner surface of the filter tube 64, see **Figure 6****.**

The filter material of the tube 64 allows water to pass through, while retaining the particles 70 inside the tube 64. Thus, water travels along the flow channel 54 along the brush 62 within the tube 64. Clean water passes through the filter material of the tube 64 into the free space 65 between the tube 64 and the support unit 42 or the cylindrical housing wall 24. The clean water then flows from the free space 65 through the flow openings 60 into the inner space 50 of the support tube 44. Water which leaves the flow channel 54, has been filtered by passing through the brush 62 and/or the filter tube 64.

After some period of operation, the brush 62 or the inner surface of the tube 64 may become clogged with particles 70. Thus, maintenance of the filter module 20 is required.

For maintenance, the closure 26 is unscrewed and the filter module 40 is removed from the housing 22. Then, the used brush 62 and tube 64 are removed from the support unit 42, e.g. by unwinding them from the support tube 44. A new assembly of a brush 62 arranged in a tube 64 is wound around the support tube 44, so the tube-brush-assembly is arranged in the flow channel 54. In particular the brush-tube-assembly may be pressed between the helical guiding element 48, preferably starting from the first end 56 of the flow channel 54 while working towards the second end 58. The filter assembly 40 is put back into the housing 22, while assuring that the closed end (i.e. cover 46) of the support tube 44 faces away from the end wall 30. A protrusion **72** on the end wall 30 may prevent full insertion of the filter assembly 40 in upside down orientation, cf. Figure 3. Fully tightening the closure 26 is preferably possible, only if the filter assembly 40 is installed in the right orientation, i.e. with cover 46 facing the closure 26.

In summary, a filter for effluent of washing machines comprises a helical flow channel. An elongate brush extends along the flow channel. Preferably, the brush is contained within a filter tube. The brush can be replaced, while the filter tube is generally reused with a new brush. The brush and the filter tube capture fibres and particles such as microplasics, when effluent is fed through the flow channel. A support unit may at least partially define the cross section of the flow channel. Preferably, the support unit is detachably arranged in a housing.

### List of Reference Signs

Washing machine **10**
Drum **12**
Water inlet **14**
Water outlet **16**
Filter module **20**
Housing **22**
Cylindrical wall **24**
Closure **26**
Handle **28**
Tool interface **29**
End wall **30**
Inlet port **32**
Inlet opening **34**
Outlet port **36**
Outlet opening **38**
Filter assembly **40**
Support unit **42**
Support tube **44**
Cover **46**
Guiding element **48**
Inner space **50**
Axis **52**
Flow channel **54**
First end **56**
Second end **58**
Flow openings **60**
Brush **62**
Tube **64**
Free space **65**
Central cord **66**
Bristles **68**
Particles **70**
Protrusion **72**

## Claims

1. Filter assembly (40), for filtering effluent of a washing machine (10), the filter assembly (40) comprising
- a support unit (42), providing a helical flow channel (54) having a first end (56) and a second end (58);
- a brush (62), detachably arranged in the helical flow channel (54) and extending along the flow channel (54) over at least part of its longitudinal extension from the first end (56) towards the second end (58).

2. Filter assembly (40) according to claim 1, wherein the brush (62) comprises a central cord (66) and bristles (68) protruding from the central cord (66).

3. Filter assembly (40) according to any one of the preceding claims, wherein the brush (62) is contained within a tube (64) made from filter material, preferably nonwoven filter material.

4. Filter assembly (40) according to claim 3, wherein the tube (64) is detachable from the support unit (42).

5. Filter assembly (40) according to any one of the preceding claims, wherein the support unit (42) comprises a cylindrical support tube (44), and wherein the flow channel (54) is wound around the support tube (44).

6. Filter assembly (40) according to claim 5, wherein the support unit (42) comprises a cover (46), which seals the support tube (64) at a first face associated with the first end (56) of the flow channel (54).

7. Filter assembly (40) according to claim 5 or 6, wherein the support tube (64) has at least one flow opening (60), which fluidically connects an inner space (50) of the support tube (64) with the flow channel (54), preferably wherein the support tube (64) comprises longitudinal and circumferential ribs, and wherein the flow openings (60) are formed between adjacent ribs.

8. Filter assembly (40) according to any one of the preceding claims, wherein the support unit (42) comprises a helical guiding element (48), which separates adjacent convolutions of the flow channel (54).

9. Filter module (20) comprising a housing (22) and a filter assembly (40) according to any one of the preceding claims, preferably wherein the filter assembly (40) is removably arranged inside the housing (22).

10. Filter module (20) according to claim 9, wherein the housing (22) has a cylindrical wall (24), which delimits the flow channel (54).

11. Filter module (20) according to claim 9 or 10, wherein the first end (56) of the flow channel (54) is fluidically connected with an inlet port (32) through an inlet opening (34) in the cylindrical wall (24).

12. Filter module (20) according to any one of claims 9 to 11, wherein the flow channel (54) surrounds an inner space (50), which is fluidically connected with the flow channel (54), and wherein the inner space (50) is fluidically connected with an outlet port (36) through an outlet opening (38) arranged in a central portion of an end wall (30) of the housing (22).

13. Filter module (20) according to any one of claims 9 to 12, wherein the housing (22) has a removable closure (26).

14. Use of a filter module (20) according to any one of claims 9 to 13 for filtering effluent of a washing machine (10).

15. Washing machine (10) comprising a filter module (20) according to any one of claims 9 to 13.
